# EUROPÄISCHE PATENTSCHRIFT

(11) **EP 2 332 286 B1**
(45) Veröffentlichungstag und Bekanntmachung des Hinweises auf die Patenterteilung: **30.04.2014**
(21) Anmeldenummer: 09777528.2
(22) Anmeldetag: 29.07.2009
(51) Int. Cl.: H04L 12/10

(54) **ANSCHLUSSEINHEIT FÜR PATCHKABEL VON POWER OVER ETHERNET NETZWERKEN**
CONNECTION UNIT FOR PATCH CABLES OF POWER-OVER-ETHERNET NETWORKS
UNITÉ DE CONNEXION POUR CÂBLES DE RACCORDEMENT DE RÉSEAUX D'ALIMENTATION SUR ETHERNET

(30) Priorität: 30.07.2008 DE 102008035544
(43) Veröffentlichungstag der Anmeldung: 15.06.2011
(73) Patentinhaber: Unify GmbH & Co. KG, 81379 München (DE)
(72) Erfinder: BORCHERS, Axel, 39128 Magdeburg (DE)
(74) Vertreter: Fritzsche, Thomas
(86) Internationale Anmeldenummer: PCT/EP2009/005504
(87) Internationale Veröffentlichungsnummer: WO 2010/012461

(56) Entgegenhaltungen:
- WO-A-2006/055948
- US-A1- 2005 080 516
- US-A1- 2005 136 989

## Beschreibung

In lokalen Netzwerken, insbesondere in Power over Ethernet (PoE) Netzwerken, werden über ein strukturiertes Kabelsystem - in der Fachwelt auch als Patchkabel bekannt - an und von den angeschlossenen Endgeräten Daten insbesondere Datenpakete übertragen. Zusätzlich wird vom lokalen Netzwerk Energie für den Betrieb der Endgeräte bereitgestellt. Ein Netzwerk gemäß Power over Ethernet ist beispielsweise im IEEE- Standard 802.3af und ein hierfür geeignetes Kabelsystem ist beispielsweise im ISO- Standard 11801 bzw. EN 50173 definiert. Ein Patchkabel bzw. Anschlusskabel für ein lokales Netzwerk verbindet einen Zugangspunkt des lokalen Netzwerks, insbesondere Power over Ethernet Netzwerk, mit einer im Endgerät angeordneten Anschlusseinheit für die physikalische Anpassung des Netzwerks an das Endgerät sowie für die bidirektionale Übertragung der Daten und der bereitgestellten Energie.

Mit Hilfe der bereitgestellten Energie - bei Power over Ethernet eine Niederspannungsquelle - werden abgesetzte Endgeräte wie beispielsweise VoIP- Telefone (Voice over Internetprotocol), WLAN- Accesspoints (Wireless Local Area Netzworks), WEB- Kameras oder Sicherheitseinrichtungen mit Energie versorgt, d.h. die Endgeräte können ohne zusätzliche Energieversorgung bzw. Spannungsversorgung am Netzwerk betrieben werden. Mit Einführung derartiger Netze wurde vorausgesetzt, dass diese Endgeräte ständig betrieben werden und folglich ständig mit Energie vom Netzwerk zu versorgen sind.

In US 2005/0136989 A1 ist ein System zur Leistungsverteilung zu Netzwerkvorrichtungen beschrieben. Das System umfasst eine Vielzahl von Netzwerkschaltern, wobei jeder eine interne Stromversorgung und eine Vielzahl von Anschlüssen zum Anschließen an die Netzwerkvorrichtungen aufweist, und eine externe Stromversorgung, die eine Vielzahl von Ausgangsanschlüssen zum Anschließen der Netzwerkschalter aufweist. Jeder Netzwerkschalter bestimmt Beträge und Prioritätswerte der Leistung für die Netzwerkvorrichtungen, die daran angeschlossen sind, addiert die Beträge bei jedem Prioritätswert, stellt zusätzliche Beträge und Prioritätswerte der Leistung fest, die über die interne Leistungsversorgungsfähigkeit hinaus erforderlich sind, und sendet eine Leistungsanforderung zur externen Stromversorgung.

In WO 2006/055948 A1 sind Systeme und Verfahren beschrieben, die eine Kommunikation zwischen einem Ethernet-Netzwerk und Nicht-Ethernet Vorrichtungen erlauben. Ein Ethernet-zu-analog Adapter erlaubt eine Übersetzung der analogen Signale für Ethernet-Kommunikation und erlaubt weiter eine Übersetzung der Ethernet-Signale für analoge Kommunikation mit analogen Vorrichtungen. Die Ethernet-zu-analog Adapter lassen eine Leistungsverwaltung und Überwachung der angeschlossenen analogen Vorrichtungen zu und setzen Power over Ethernet zur Leistungszufuhr zu den analogen Vorrichtungen ein.

Die der der Erfindung zugrundeliegende Aufgabe besteht darin, den Energieverbrauch für Netzwerke, die für ihre Endgeräte Energie bereitstellen, auf wirtschaftliche und universelle Weise zu reduzieren. Die Aufgabe wird durch die Merkmale der Ansprüche 1,11 bis 13 und 16 gelöst.

Der wesentliche Aspekt der Erfindung ist darin zu sehen, dass die Anschlusseinheit zur Erzeugung von elektrischer Energie für die Anschlusseinheit aus der bereitgestellten Energie ausgestaltet ist und ein Schaltelement zur Unterbrechung der bereitgestellten elektrischen Energie für die Endgeräte aufweist, wobei die Anschlusseinheit einschließlich des Schaltelements bei einem der beiden Steckverbinder eines Patchkabels oder im Pachtkabel (PK) realisiert ist und das Schaltelement über das Netzwerk gesteuert wird.

Ein wesentlicher Vorteil der Erfindung ist darin zu sehen, dass über das Netzwerk mit Hilfe der Schaltelemente die Energieversorgung der Endgeräte beispielsweise in Abhängigkeit von der Anwesenheit bzw. des Aufenthaltsortes von Benutzern von Endgeräten unterbrochen werden kann. Da die Unterbrechungen der Energieversorgung zu den Endgeräten über längere Zeiträume wie beispielsweise während der Nacht oder längerer Abwesenheit vom Endgerät gesteuert werden kann, kann der Energieverbrauch der Endgeräte bzw. der Netzwerke, die den Endgeräten die Energie bereitstellen, erheblich reduziert werden.

Das Netzwerk ist erfindungsgemäß als Power over Ethernet, insbesondere gemäß dem IEEE- Standard 802.3af ausgestaltet. Erfindungsgemäß ist die Anschlusseinheit einschließlich des Schaltelements bei einem der beiden Steckverbinder eines Patchkabels oder im Pachtkabel realisiert. Durch die Integration der Anschlusseinheit - in der Fachwelt als Netzkarte bekannt - einschließlich des Schaltelements ist eine besonders wirtschaftliche Realisierung der Erfindung möglich. Bei der erfindungsgemäßen Integration können die Endgeräte weitgehend unverändert weiterbenutzt werden.

Für die Steuerung des Schaltelements durch das zugeordnete Management-System wird der Anschlusseinheit bzw. dem Schaltelement vorzugesweise eine Netzwerkadresse zugeordnet. Da in den Netzwerken in zunehmendem Maße das Internetprotokoll eingesetzt ist, ist die Netzwerkadresse vorzugsweise durch eine Internetadresse repräsentiert. Die Netzwerkadresse ist in eine von dem Management-System gebildete Anweisung eingefügt, die an die Anschlusseinheit über das Netzwerk übertragen und die eine Information für die Steuerung des Schaltelements enthält.

Das Schaltelement kann vorteilhaft zeitabhängig und/oder von der Anwesenheit eines Benutzers an oder im Bereich von zugeordneten Endgeräten und/oder ortsabhängig und/oder sicherheitsabhängig gesteuert werden. Für die zeitabhängige Steuerung ist beispielsweise eine Tageszeitsteuerung und/oder Wochensteuerung im Management-System vorgesehen. Für die anwesenheitsabhängige bzw. ortsabhängige Steuerung kann ein Zugangssystem oder ein RFID- System oder ein GPS- System oder ein drahtloses Ortungssystem vorgesehen werden, wobei die Anwesenheit und der Ort eines Benutzers dem Management-System für die Steuerung des Schaltelements signalisiert wird.

Vorteilhaft wird bei unterbrochener Bereitstellung der Energie für die Engeräte die Anschlusseinheit in einen Energieverbrauchsreduzierten Zustand gesteuert. Hierdurch kann der Energieverbrauch weiter reduziert werden.

Weitere vorteilhafte Weiterbildungen der Erfindung bzw. eine Ausgestaltung einer erfindungsgemäßen Anschlusseinheit, eines Management-System und der Verwendung erfindungsgemäßen Anschlusseinheit in einer Kommunikationsanordnung sind den weiteren Ansprüchen zu entnehmen.

Im Folgenden werden die Erfindung und deren Weiterbildungen anhand zweier zeichnerischen Darstellungen näher erläutert. Dabei zeigen
- Figur 1: in einem Strukturbild ein Netzwerk, in dem die erfindungsgemäße Anschlusseinheit realisiert ist, und
- Figur 2: in einem Blockschaltbild eine Realisierung einer Anschlusseinheit.

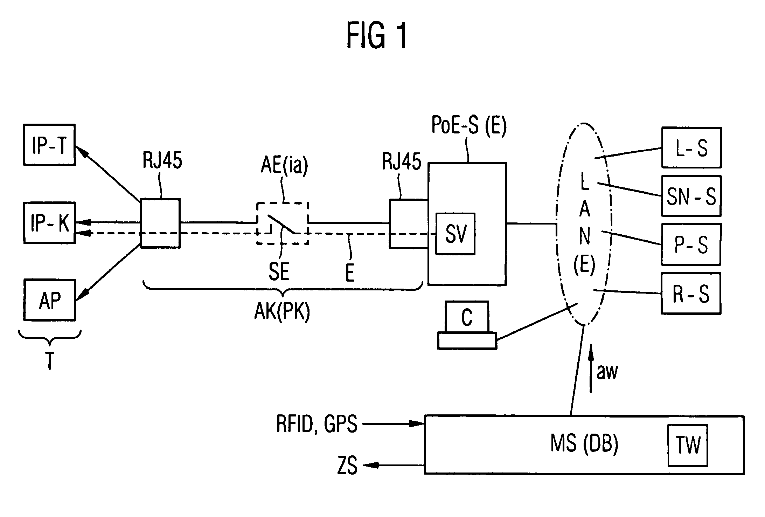

Figur 1 zeigt einen Power over Ethernet Switch PoE-S, an den beispielhaft ein Anschlusskabel AK angeschlossen ist. Das Anschlusskabel AK ist in der Fachwelt als Patchkabel PK bekannt und wird im Weiteren als Patchkabel PK bezeichnet- in Figur 1 durch die Bezeichnung AK(PK) angedeutet. Das Patchkabel PK kann mit unterschiedlichen Endgeräten T verbunden werden. Anschließbare Endgeräte T sind beispielsweise IP- Telefone IP-T, IP- Kameras IP-K oder auch Zugriffspunkte AP - Access Points - für drahtlos anschließbare Endgeräte für drahtlose lokale Netzwerke, z.B. Wireless LAN - in Figur 1 sind die Verbindungen durch Pfeile angedeutet.

Ein Power over Ethernet Switch PoE-S stellt eine Vermittlungseinheit in einem Ethernet E bzw. lokalen Netzwerk LAN dar, mit dessen Hilfe Ethernet- Segmente verbunden und Kommunikationsbeziehungen zwischen den an das Ethernet E bzw. die Ethernet-Segmente angeschlossenen Endgeräten T oder zu Endgeräten T weiterer Netzwerke signalisiert und vermittelt werden - in der Figur durch die Bezeichnung PoE-S(E) angedeutet. Die Vermittlung erfolgt überwiegend in der Schicht 2 bzw. in der Sicherungsschicht auf der Basis von hardwarenahen MAC- Adressen (Media Access Control). Moderne Power over Ethernet Switche PoE-S verfügen über Schicht 3- Funktionen für die Überwachung und Steuerung der lokalen Netzwerke sowie Management-funktionen in den lokalen Netzwerken.

Zusätzlich ist ein Power over Ethernet Switch PoE-S mit einer Stromversorgung SV ausgestattet, mit der elektrische Energie E für die angeschlossenen Endgeräte T bereitgestellt wird. Die Energie- bzw. Spannungsversorgung vom Power over Ethernet Switch PoE-S zum Endgrät T erfolgt über das Patchkabel PK - in der Figur 1 durch einen gestrichelten, mit E bezeichneten Pfeil angedeutet. Die Energie- bzw. Spannungsversorgung der an den Power over Ethernet Switch PoE-S angeschlossenen Endgeräte T ist vorteilhaft gemäß dem IEEE- Standard 802.3af realisiert. Das Patchkabel PK ist auf beiden Seiten mit einem standardisierten Steckverbinder RJ-42 versehen, wobei die Energieversorgung über hierfür vorgesehene Anschlusselemente bzw. Steckpunkte des Steckverbinders RJ-45 erfolgt. Die vom Power over Ethernet Switch PoE-S zum Terminal T zu übermittelnden Daten bzw. Information und umgekehrt werden über andere Anschlusselement der Steckverbinder RJ-45 übertragen. Das Patchkabel PK für die Übertragung von Daten bzw. Datenpaketen und für die Energieversorgung über das Patchkabel PK ist vorteilhaft als strukturiertes Verkabelungs-System dem ISO- Standard 11801 bzw. EN 50173 ausgestaltet.

Gemäß dem ITU- Standard 803.2af werden die beteiligten Geräte in Energieversorger (Power Sourcing Equipment, PSE) und Energie-Verbraucher (Powered Devices, PD) unterteilt. Die Versorgungsspannung beträgt 48 V, der maximale Strom im Dauerbetrieb ist 350 mA. Zur Energieübertragung werden üblicherweise die freien Anschlüsse bzw. Leitungen des Ethernetkabels bzw. Patchkabels PK verwendet. Sofern dies nicht möglich ist, können auch die signalführenden Anschlüsse bzw. Leitungen des Patchkabels PK genutzt werden. Die Energieübertragung über Signalleitung wirkt sich bei Ethernet mit 10BaseT (10Mbit/s) und bei 100BaseTX (10OMbit/s) nicht störend auf das übertragene Signal aus. Bei 1000BaseT sind alle 8 Anschlüsse bzw. Leitungen belegt, d.h. die Energie wird hier zusammen mit dem Signal übertragen.

Der Power over Ethernet Switch PoE-S ist mit einem lokalen Netzwerk LAN verbunden, das im Ausführungsbeispiel ein Ethernet E ist - in der Figur durch die Bezeichnung LAN(E) angedeutet. Im Ethernet E ist als übergeordnetes Signalisierungs-Protokoll vorzugsweise das Internet- Protokoll bzw. bei Sprachübertragung ein VoIP- Protokoll (Voice over Internet Protocol) vorgesehen.

An den Power over Ethernet Switch PoE-S ist ein LDAP- Server L-S angeschlossen, mit dem ein standardisiertes Lightweight Directory Access Protocol (LDAP) realisiert wird. Das in der aktuellen Version in RFC 4511 standardisierte Protokoll LDAP basiert auf einer Client/Server- Struktur, d.h. an das lokale Netzwerk LAN ist für die Kommunikation mit dem LAPD- Server L-S ein Client C - üblicherweise durch ein Personalcomputersystem realisiert - angeschlossen. IM LDAP- Server L-S ist ein Verzeichnis implementiert, das durch den Client C administriert und abgefragt werden kann. Hierdurch sind insbesondere Management-Funktionen im lokalen Netzwerk LAN und den Endgeräten T überwach- und steuerbar.

Für die Authentisierung der an das lokale Netzwerk LAN angeschlossenen Endgeräte T und Server S ist ein Authentisierungsserver P-S an das lokale Netzwerk LAN angeschlossen. Mit Hilfe des Authentisierungsservers P-S werden die Benutzer wie Terminal T oder andere Komponenten des lokalen Netzwerks LAN durch Zertifikate zertifiziert, wofür im Authentisierungsserver P-S öffentliche Schlüssel - sogenannte Public Keys - bereitgestellt werden.

An das lokale Netzwerk LAN ist im Ausführungsbeispiel ein RADIUS- Server R-S (Remote Authentication Dial-In User Service) angeschlossen. Ein RADIUS- Server R-S ist ein zentraler Authentifizierungsserver, an den alle Remote Access Dienste (RAS), d.h. alle sich in das lokale Netzwerk LAN einwählenden Terminals identifiziert werden. Der RADIUS- Server R-S übernimmt für den RAS- Dienst die Authentifizierung, d.h. es wird der Benutzername und das Kennwort überprüft. Des Weiteren werden die Parameter für die aktuelle Verbindung bereitgestellt.

An das lokale Netzwerk LAN ist weiterhin ein SNMP- Server SN-S angeschlossen, mit dessen Hilfe ein Simple Network Management Protocol SNMP realisiert ist. Das von der IETF standardisierte SNMP- Protokoll ist für die Überwachung und Steuerung von Netzwerkkomponenten wie Switches, Server, Computer usw. von zentraler Stelle bzw. vom SNMP- Server SN-S vorgesehen. Das Protokoll beschreibt den Aufbau der Datenpakete sowie den Kommunikationsablauf im Einzelnen für die Überwachung der Netzwerkkomponenten, die Fernsteuerung und Fernkonfiguration der Netzwerkkomponenten sowie die Fehlererkennung und Fehlerbenachrichtigung.

Der wesentliche Aspekt der Erfindung besteht darin, dass in das Patchkabel PK eine Anschlusseinheit AE für den Anschluss an den Power over Ethernet Switch PoE-S integriert ist, in dem ein Schaltelement SE für die Unterbrechung der Energieversorgung SV zum Endgerät T angeordnet ist - in der Figur 1 durch ein gestricheltes Rechteck mit der Bezeichnung AE angedeutet. Das Schaltelement SE wird über die Anschlusseinheit AE und über den Power over Ethernet Switch PoE-S durch ein zentrales Management-System MS im lokalen Netzwerk LAN gesteuert bzw. gemanagt. Das überwiegend durch Software realisierte Management-System MS ist beispielsweise im LDAP-Server L-S zusammen mit dem Client C oder eigenständig zusammen mit einer Datenbank DB für die Steuerung bzw. das Management des Schaltelements SE in der Anschlusseinheit AE im lokalen Netzwerk angeordnet. Für das Ausführungsbeispiel sei angenommen, dass das Management- System MS eigenständig durch einen Management- Server MS realisiert ist.

Für die Steuerung bzw. das Management der Schaltelemente SE in den Anschlusseinheiten AE ist jedem Patchkabel PK bzw. jeder Anschlusseinheit AE eine Internet-Adresse ia zugeordnet. Mit Hilfe der Internet-Adressen ai kann jedes Schaltelement SE gezielt angesteuert und die Energieversorgung EV gezielt an ein Endgerät T geschaltet oder unterbrochen werden.

Die Steuerung bzw. das Management der Schaltelemente SE kann in Abhängigkeit unterschiedlicher Kriterien durchgeführt werden. Eine erste Möglichkeit besteht darin, die Schaltelemente SE zeitabhängig bzw. tageszeitabhängig zu steuern. Beispielsweise können in Nachtzeiten oder an Wochenenden durch das Management-System MS im zugeordneten lokalen Netzwerk LAN die Schaltelemente SE derart gesteuert werden, dass die Versorgung mit elektrischer Energie E zu den angeschlossenen Endgeräten T unterbrochen wird. Hierdurch kann der Energieverbrauch erheblich reduziert werden. Die Zeitsteuerung ist beispielsweise in das Management- System MS für die jeweiligen Endgeräte T als eine Tageszeit/ Wochensteuerung TW integriert oder kann durch externe Zeitsteuerungen ZS bereitgestellt werden - in der Figur 1 durch einen mit ZS bezeichneten Pfeil angedeutet.

Eine weitere Möglichkeit besteht darin, die Schaltelemente SE in Abhängigkeit der Anwesenheit der Benutzer an den Endgeräten T oder deren Aufenthaltsorte zu steuern. Beispielsweise kann durch vorhandene oder zukünftige Lokalisierungstechniken wie RFID- Techniken oder GPS- Systeme oder auch Zugangssysteme für gesicherte Bereiche oder zu Unternehmen festgestellt werden, ob der Benutzer eines Endgeräts T, beispielsweise eines Telefons, sich in der Nähe oder im Bereich seines Endgeräts T aufhält und bei einer Anwesenheit wird erfindungsgemäß die Energievorsorgung SV an das Endgerät T geschaltet und bei einer festgestellten Abwesenheit wird die Energieversorgung SV zu seinem Endgerät T unterbrochen. Hierbei kann der Energieverbrauch noch weiter reduziert werden, da nur bei einer aktuellen Anwesenheit eines Benutzers eines Endgeräts T sein zugeordnetes Endgerät T mit Energie versorgt wird. Diese Ausgestaltung der Erfindung ist sowohl für im Bereich von Unternehmen als auch im Heimbereich genutzte Endgeräte T vorteilhaft.

Lokalisierungssysteme wie RFID (Radio Frequency Identification) oder GPS- System (Global Position System) sind in der Nähe der Endgräte T beim Benutzer der Endgeräte T vorzusehen und kommunizieren mit dem Management-System über drahtgebundene oder drahtlose lokale Netzwerke LAN - in der Figur 1 durch einem mit RFID,GPS bezeichnet Pfeil angedeutet.

Für die Übertragung der Steuerinformation über verteilte lokalen Netzwerke LAN und deren Netzkomponenten sind besondere Sicherungsmechanismen vorzusehen, die beispielsweise durch eine PKI- Infrastruktur realisiert sind. Eine PKI-Struktur basiert auf Verschlüsselungs- Verfahren mit zwei Schlüsseln, dem öffentlichen Schlüssel bzw. Public Key und dem privaten Schlüssel bzw. dem Private Key. Die Verschlüsselung der Nachricht erfolgt durch den öffentlichen Schlüssel in Kombination mit einem mathematischen Algorithmus und die Entschlüsselung erfolgt durch einen geheimen privaten Schlüssel, den nur der Empfänger kennt.

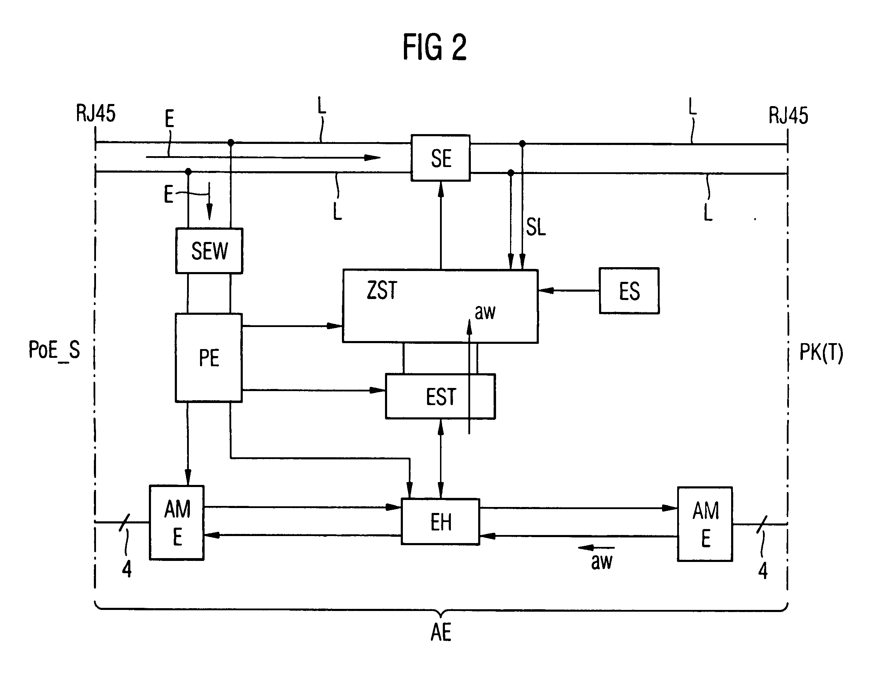

Figur 2 zeigt in einem Blockschaltbild die Struktur einer Anschlusseinheit AE. Die Anschlusseinheit AE enthält neben den erfindungsspezifischen Funktionen die Funktionen einer in Fachwelt bekannten Netzwerkkarte, d.h. die physikalische Anschlusstechnik und die prozeduralen Eigenschaften für den Anschluss an den Power over Ethernet Switch PoE-S bzw. an das lokale Netzwerk LAN bzw. Ethernet E.

Für das Ausführungsbeispiel sei angenommen, dass die Anschlusseinheit AE an oder in einem Steckverbinder RJ45 des Patchkabels PK realisiert ist, mit dem das Patchkabel KB an den Power over Ethernet Switch PoE-S angeschlossen wird. Alternativ ist eine Ausgestaltung in oder an dem Steckverbinder RJ45 zum Endgerät T bzw. Patchkabel PK oder auch als eigenständige Einheit möglich, die in die Leitungen des Patchkabels PK integriert ist - siehe Figur 1.

Die Anschlusseinheit AE weist eine zentrale Steuerung ZST auf, die mit einer Ethernet- Steuerung EST verbunden ist. Hierbei übernimmt die Ethernet- Steuerung die protokollgemäße Steuerung des Ethernetprotokolls, wobei das Ethernet E beispielsweise gemäß dem IEEE- Standard 802.3 mit dem CSMA-CD Zugriffsverfahren (Carrier Sense Multiple Access wir Collision Detection) ausgestaltet ist. Die Zentrale Steuerung - beispielsweise ein Mikrocontroller mit geringem Energieverbrauch - übernimmt alle weiteren Steuerungen insbesondere hinsichtlich der Überwachung und Fehlererkennung sowie der Administration der Anschlusseinheit AE.

Die Ethernet- Steuerung EST ist mit einem Ethernet-Hub EH verbunden, an den zwei Ethernet- Anschlussmodule AME angeschlossen sind. Der Ethernet-Hub EH ist für die Kopplung des zum Patchkabel PK bzw. Endgerät T gerichteten Anschlussmoduls AME mit dem zum Power over Ethernet- Switch gerichteten Anschlussmodul AME vorgesehen, wobei der Ethernet-Hub EH durch die Ethernet-Steuerung EST gesteuert wird. Mit Hilfe der Anschlussmodule AME wird die interne Schnittstelle physikalisch an das Ethernet E angepasst.

Für den Anschluss an den Power over Ethernet- Switch PoE-S und an eine Leitung des Patchkabels PK oder eines herkömmlichen Patchkabels ist jeweils der standardisierte Steckverbinder RJ45 vorgesehen, wobei die von den Anschlussmodulen AME bereitgestellte Ethernetschnittstelle auf die vorgesehenen Steckpunkte 1,2,3 und 6 der standardisierten Steckverbinder RJ45 geführt ist.

Beim Ausführungsbeispiel sind die Steckpunkte 4,5,7 und 8 der beiden Steckverbinder RJ45, die für die Übertragung der elektrischen Energie E vorgesehen sind, jeweils mit einem Schaltelement SE verbunden, mit dessen Hilfe die Übertragung der Energie E zum Patchkabel PK bzw. Endgerät T geschaltet, d.h. unterbrochen oder eingeschaltet werden kann. Das Schaltelement SE ist mit der zentralen Steuerung ZST verbunden, durch die das Schaltelement SE gesteuert bzw. gemanagt wird, wobei die zentrale Steuerung ZST über das Ethernet E bzw. das lokale Netzwerk LAN durch entsprechende von dem Management-System MS übermittelte meldungsorientierte Anweisungen aw über die Steuerung des Schaltelements SE erhält - in Figur 1 und 2 sind die Answeisungen aw durch mit aw bezeichnete Pfeile angedeutet.

Zusätzlich ist ein weiteres Schaltelement SEW mit den Leitungen L verbunden, das zwischen dem zum Power over Ethernet Switch PoE-S gerichteten Steckverbinder RJ-45 und dem Schaltelement SE geführt sind. Das weitere Schaltelement SEW ist weiterhin mit einer Energiesteuerung PD verbunden, mit der die Anschlusseinheit AE in Abhängigkeit von Schalterstellung mit Energie E versorgt werden kann oder nicht.

Mit Hilfe der Energieeinheit PE wird ein Teil der von den Leitungen L übermittelten Energie E bzw. Spannung an die erforderlichen Spannungen der Anschlusseinheit AE angepasst. Nach einer Inbetriebnahme der Anschlusseinheit AE ist das Schaltelemente SE in einer Schaltstellung "Offen", d.h. es kann keine Energie E weitergeleitet werden. Dagegen ist das weitere Schaltelement SEW in der Schaltstellung "geschlossen", d.h. es kann Energie E weitergeleitet werden. Von dem Power over Ethernet Switch PoE-S wird mit einer standardisierten Erkennungsprozedur überprüft, ob ein Endgerät T Power over Ethernet- tauglich ist, d.h. ob es für die Versorgung mit von dem Power over Ethernet Switch PoE-S bereitgestellten Energie E ausgestaltet ist. In dieser Situation stellt die Energiesteuerung PD das mit Energie E zu versorgende Endgerät dar und ist so ausgestaltet, dass es sich bei dieser Erkennungsprozedur wie ein Endgerät verhält, das mit Energie E zu versorgen ist. Folglich wird von dem Power over Ethernet Switch PoE-S Energie E an die Anschlusseinheit AE bzw. über das weitere Schaltelement SEW an die Energiesteuerung PD übertragen, mit deren Hilfe die Komponenten der Anschlusseinheit AE mit Energie bwz. Spannung versorgt werden.

Von den zwischen den zum Patchkabel PK bzw. Endgerät T gerichteten Steckverbinder RJ-45 und dem Schaltelement SE geführten Leitungen L sind Sensorleitungen SL zur zentralen Steuerung ZST geschaltet. Mit in der zentralen Steuerung ZST implementierten Analog/Digitalwandlern und geeigneten Programmen wird über die Sensorleitungen SL festgestellt, ob ein Endgerät T an die Anschlusseinheit AE angeschlossen ist, wobei durch Widerstandsmessung zwischen den Leitungen L ermittelt wird, ob über das Patchkabel PK ein Endgeräts T angeschlossen ist. Ist ein Endgerät T angeschlossen, so werden durch das Schaltelement SE die Leitungen L von einem Steckverbinder RJ-45 zum gegenüberliegenden Steckverbinder RJ-45 verbunden, wodurch die vom Power over Ethernet Switch PoE-S übermittelte Energie E über das Patchkabel PK zum Endgerät T weitergeleitet wird.

Nach dem Verbinden der Leitung L wird durch das weitere Schaltelement SEW die Verbindung zwischen den Leitungen L und der Energiesteuerung PD getrennt, wobei in dieser Situation die Versorgung der Anschlusseinheit AE mit Energie E ein Energiespeicher ES übernimmt. Der Energiespeicher ES ist beispielsweise durch einen Speicherkondensator mit großer Kapazität oder andere elektrische Energie speichernde Speicher realisiert. Mit dem Unterbrechen der Energiezufuhr zur Energiesteuerung PD wird die standardisierte Erkennungsprozedur über das Patchkabel PK mit dem Endgerät T durchgeführt, wobei über die Sensorleitungen SL die zentrale Steuerung ZST den Pegelverlauf auf den Leitungen L beobachtet. Nach dem Erkennen des Endes der Erkennungsprozedur durch die zentrale Steuerung ZST, wird das weitere Schaltelement SEW in die Schaltstellung "geschlossen" gesteuert, wodurch die Energie E an die Energiesteuerung PD geführt wird und die Anschlusseinheit AE mit Energie versorgt wird.

Nach einer Übermittlung einer Anweisung aw vom Managementsystem MS zur zentralen Steuerung ZST mit der Maßgabe, die Energiezufuhr zum Endgerät T zu unterbrechen, wird das Schaltelement SE in eine Schaltstellung "offen" gesteuert und damit die Energiezufuhr unterbrochen. In diesem Zustand wird die Anschlusseinheit AE über die Energiesteuerung PD mit Energie E versorgt, wobei die Anschlusseinheit AE wenig Energie verbraucht. Um den Energieverbrauch weiter zu reduzieren, wird die Anschlusseinheit AE in einen Energiesparmodus gesteuert. Hierdurch kann der Energieverbrauch weiter erheblich reduziert werden.

Mit Hilfe der Erfindung kann die Zufuhr von elektrischer Energie für Endgeräte T, die an ein Netzwerk angeschlossen sind, das für die Endgeräte T die Energieversorgung SV bereitstellt, unterbrochen werden, um den Energieverbrauch zu reduzieren. Die Unterbrechung wird durch eine Management-System MS im Netzwerk LAN zeitabhängig - beispielsweise Nachtzeit und Wochenende - oder anwesenheits- und ortsabhängig - beispielsweise erfasst durch Lokalisierungssysteme wie Zugangssystem, RFID- Systeme oder GPS-Systeme - gesteuert. Alternativ kann die Anschlusseinheit AE über den Energiespeicher ES in einem Energiesparmodus mit Energie versorgt werden, wobei die Anschlusseinheit AE durch eine Anweisung aw mit Hilfe des weiteren Schaltelements SEW wieder mit Energie durch die Energiesteuerung PD bzw. von dem Power over Ethernet Switch PoE-S versorgt wird.

## Patentansprüche

1. Anschlusseinheit für die Verbindung eines Endgeräts (T) mit einem Netzwerk (LAN), das dem verbundenen Endgerät (T) elektrische Energie (E) bereitstellt,
- ausgestaltet zur Erzeugung von elektrischer Energie (E) für die Anschlusseinheit (AE) aus der bereitgestellten Energie (E) und
- mit einem Schaltelement (SE) zur Unterbrechung der bereitgestellten elektrischen Energie für die Endgeräte (T), wobei das Schaltelement (SE) über das Netzwerk (LAN) gesteuert wird,
**dadurch gekennzeichnet, dass**
die Anschlusseinheit (AE) einschließlich des Schaltelements (SE)
- bei einem der beiden Steckverbinder (RJ45) eines Patchkabels (PK) oder
- im Patchkabel (PK)
realisiert ist.

2. Anschlusseinheit nach Anspruch 1, **dadurch gekennzeichnet,**
**dass** das Netzwerk (LAN) als Power over Ethernet ausgestaltet ist.

3. Anschlusseinheit nach Anspruch 2, **dadurch gekennzeichnet,**
**dass** das Power over Ethernet gemäß dem Standard IEEE 802.3af ausgestaltet ist.

4. Anschlusseinheit nach einem der Ansprüche 1 bis 3, **dadurch gekennzeichnet,**
**dass** dem Schaltelement (SE) und/oder der Anschlusseinheit (AE) eine Netzwerkadresse (ia) zugeordnet wird, und dass das Schaltelement (SE) mit Hilfe der zugeordneten Netzwerkadresse (ai) durch zumindest ein Management- System (MS) eines Netzwerks (LAN) gesteuert wird.

5. Anschlusseinheit nach Anspruch 4, ausgestaltet
zum Empfang einer durch die Netzwerkadresse (ai) adressierten Anweisung (aw) vom Management- System (MS) und zum Steuern des Schaltelements (SE) in Abhängigkeit der Anweisung (aw).

6. Anschlusseinheit nach einem der Ansprüche 1 bis 5, derart ausgestaltet,
dass das Schaltelement (SE) über das Netzwerk (LAN)
- zeitabhängig Und/oder
- von der Anwesenheit und/oder eines Benutzers an oder im Bereich von zugeordneten Endgeräten (T) und/oder
- sicherheitsabhängig
gesteuert wird.

7. Anschlusseinheit nach Anspruch 6, derart ausgestaltet, dass für die zeitabhängige Steuerung eine Tageszeitsteuerung und/oder Wochensteuerung im Management-System (MS) vorgesehen ist.

8. Anschlusseinheit nach Anspruch 6, derart ausgestaltet, dass für die anwesenheits- und/oder ortsabhängige Steuerung ein Zugangssystem oder ein RFID- System RFID oder ein GPS-System GPS oder ein drahtloses Ortungssystem vorgesehen ist, wobei die Anwesenheit und/oder der Ort eines Benutzers dem Management-System (MS) für die Steuerung des Schaltelements (SE) signalisiert wird.

9. Anschlusseinheit nach einem der vorhergehenden Ansprüche, derart ausgestaltet,
dass bei unterbrochener Bereitstellung der Energie (E) für die Engeräte (T) die Anschlusseinheit (AE) in einen energieverbrauchs- reduzierten Zustand gesteuert wird.

10. Anschlusseinheit nach einem der vorhergehenden Ansprüche mit
- einer zentralen Steuerung (ZST) zur Überwachung und Steuerung der Anschlusseinheit (AE)
- einer mit der zentralen Steuerung (ZST) verbunden Ethernet-Steuerung (EST) zur Steuerung des Ethernet- Protokolls,
- einem von der zentralen Steuerung (ZST) gesteuerten Schaltelement (SE) zur Unterbrechung der Energieversorgung, die von einem Steckverbinder (RJ45) der Anschlusseinheit zu einem weiteren Steckverbinder (RJ45) der Anschlusseinheit (AE) geschaltet ist,
- zwei über einen Ethernet-Hub (EH) mit der zentralen Steuerung (ZST) verbundenen Anschlussmodulen (AME) zur Anpassung an das Ethernet (E) an dem Steckverbinder (RJ45) und dem weiteren Steckverbinder (RJ45,
- einer Energiesteuerung (PE) zur Anpassung der Spannungen der über den Steckverbinder (RJ45) und das Schaltelement (SE) übermittelten elektrischen Energie (E) an die erforderlichen Spannungen der Anschlusseinheit (AE) und
- mit einem Energiespeicher (E) zur Energieversorgung der Anschlusseinheit (AE) bei durch das Schaltelement (SE) unterbrochener Energieversorgung.

11. Anschlusseinheit nach einem der vorhergehenden Ansprüche, wobei das Patchkabel (PK) mit der Anschlusseinheit (AE) realisiert ist mit
- einer zentralen Steuerung (ZST) zur Überwachung und Steuerung der Anschlusseinheit (AE),
- einer mit der zentralen Steuerung (ZST) verbunden Ethernet-Steuerung (EST) zur Steuerung des Ethernet- Protokolls,
- einem von der zentralen Steuerung (ZST) gesteuerten Schaltelement (SE) zur Unterbrechung der Energieversorgung, die von einem Steckverbinder (RJ45) der Anschlusseinheit zu einem weiteren Steckverbinder (RJ45) geschaltet ist,
- zwei über einen Ethernet-Hub (EH) mit der zentralen Steuerung (ZST) verbundenen Anschlussmodulen (AME) zur Anpassung an das Ethernet (E) an dem Steckverbinder (RJ45) und dem weiteren Steckverbinder (RJ45),
- einer Energiesteuerung (PE) zur Anpassung der Spannungen der über den Steckverbinder (RJ45) und das Schaltelement (SE) übermittelten elektrischen Energie (E) an die erforderlichen Spannungen der Anschlusseinheit (AE) und
- einem Energiespeicher (E) zur Energieversorgung der Anschlusseinheit (AE) bei durch das Schaltelement (SE) unterbrochener Energieversorgung.

12. Management- System für zumindest ein zugeordnetes Netzwerk (LAN) zur Steuerung von Anschlusseinheiten (AE) für die Verbindung von Endgeräten (T) mit dem Netzwerk (LAN), das den verbundenen Endgeräten (T) elektrische Energie (E) bereitstellt, wobei die Anschlusseinheiten (AE) jeweils ein Schaltelement (SE) zur Unterbrechung der Bereitstellung von elektrischer Energie (E) für die Endgeräte (T) aufweisen und die Anschlusseinheiten (AE) jeweils einschließlich des Schaltelements (SE)
- bei einem der beiden Steckverbinder (RJ45) eines Patchkabels (PK) oder
- im Pachtkabel (PK)
realisiert sind,
- mit einer Datenbasis mit den Adressen (ai) der Anschlusseinheit (AE) und/oder deren Schaltelemente (SE)
- mit einer Steuerung (ZST) zum Bilden und zum gezielten Übermitteln von Anweisungen (aw) über das Netzwerk (LAN) an die Anschlusseinheit (AE) zum Steuern des Schaltelements (SE), wobei die Anweisungen (aw) zeitabhängig und/oder von der Anwesenheit des Ortes eines Benutzers an oder im Bereich von zugeordneten Endgeräten (T) oder sicherheitsabhängig gebildet werden.

13. Management- System nach Anspruch 12, ausgestaltet mit einer Tageszeitsteuerung und/oder Wochensteuerung zur zeitabhängigen Steuerung des Schaltelements (SE).

14. Management- System nach Anspruch 12 oder 13, ausgestaltet mit einer Netzwerksteuerung
- zur Kommunikation mit Anwesenheits- und/oder Ortsbestimmungs-Einrichtungen (RFID,GPS), mit deren Hilfe die Anwesenheit oder der Ort eines Benutzers an oder im Bereich von zugeordneten Endgeräten (T) ermittelt und dem Mangement- System (MS) signalisiert wird, und
- zur Kommunikation mit Sicherheitseinrichtung zur sicherheitstechnischen Überprüfung von Endgeräten (T) und deren Benutzern.

15. Verfahren zur Steuerung der Anschlusseinheit nach einem der Ansprüche 1 bis 12 in einer Kommunikationsanordnung
- mit der Anschlusseinheit (AE) und
- mit einen Management- System im Netzwerk (LAN) für die zeitabhängige und/oder die anwesenheitsabhängige und/oder sicherheitsabhängige Steuerung des Schaltelements (SE) über das Netzwerk (LAN)

## Claims

1. Connection unit for connecting a terminal (T) to a network (LAN) which provides electrical energy (E) to the connected terminal (T),
- configured to produce electrical energy (E) for the connection unit (AE) from the energy (E) provided, and
- with a switching element (SE) for interrupting the electrical energy provided for the terminals (T), wherein the switching element (SE) is controlled via the network (LAN)
**characterised in that** the connection unit (AE), including the switching element (SE), is implemented
- in one of the two plug connectors (RJ45) of a patch cable (PK) or
- in the patch cable (PK).

2. Connection unit according to claim 1, **characterised in that** the network (LAN) is designed as a Power-Over-Ethernet system.

3. Connection unit according to claim 2, **characterised in that** Power-Over-Ethernet is configured according to standard IEEE 802.3af.

4. Connection unit according to any of claims 1 to 3, **characterised in that** a network address (ia) is assigned to the switching element (SE) and/or the connection unit (AE), and that the switching element (SE) is controlled by at least one management system (MS) of a network (LAN) by means of the assigned network address (ai).

5. Connection unit according to claim 4, configured to receive an instruction (aw) addressed by the network address (ai) from the management system (MS) and to control the switching element (SE) as a function of the instruction (aw).

6. Connection unit according to any of claims 1 to 5, configured such that the switching element (SE) is controlled via the network (LAN)
- time dependently, and/or
- dependent on the presence and/or location of a user on or in the region of allocated terminals (T), and/or
- security-dependently.

7. Connection unit according to claim 6, configured such that for the time-dependent control, a time-of-day controller and/or week controller is provided in the management system (MS).

8. Connection unit according to claim 6, configured such that for the presence- and/or location-dependent control, an access system or an RFID system (RFID) or a GPS system (GPS) or a wireless location system is provided, wherein the presence and/or location of a user is signalled to the management system (MS) for controlling the switching element (SE).

9. Connection unit according to any one of the preceding claims, configured such that when the provision of the energy (E) for the terminals (T) is interrupted, the connection unit (AE) is set into an energy-consumption-reducing state.

10. Connection unit according to any one of the preceding claims, with
- a central control system (ZST) for monitoring and control of the connection unit (AE),
- an Ethernet control system (EST) connected to the central control system (ZST) for controlling the Ethernet protocol,
- a switching element (SE) controlled by the central control system (ZST) for interrupting the energy supply, which is switched from one plug connector (RJ45) of the connection unit to a further plug connector (RJ45) of the connection unit (AE),
- two connection modules (AME) connected via an Ethernet hub (EH) to the central control system (ZST) for adaptation to the Ethernet (E) at the plug connector (RJ45) and the further plug connector (RJ45),
- an energy control system (PE) for adapting the voltages of the electrical energy (E), which is transmitted via the plug connector (RJ45) and the switching element (SE), to the necessary voltages of the connection unit (AE), and
- an energy accumulator (E) for energy supply to the connection unit (AE) when the energy supply is interrupted by the switching element (SE).

11. Connection unit according to any one of the preceding claims, wherein the patch cable (PK) is implemented with the connection unit (AE), with
- a central control system (ZST) for monitoring and control of the connection unit (AE),
- an Ethernet control system (EST) connected to the central control system (ZST) for controlling the Ethernet protocol,
- a switching element (SE) controlled by the central control system (ZST) for interrupting the energy supply, which is switched from one plug connector (RJ45) of the connection unit to a further plug connector (RJ45),
- two connection modules (AME) connected via an Ethernet hub (EH) to the central control system (ZST) for adaptation to the Ethernet (E) at the plug connector (RJ45) and the further plug connector (RJ45),
- an energy control system (PE) for adapting the voltages of the electrical energy (E), which is transmitted via the plug connector (RJ45) and the switching element (SE), to the necessary voltages of the connection unit (AE), and
- an energy accumulator (E) for energy supply to the connection unit (AE) when the energy supply is interrupted by the switching element (SE).

12. Management system for at least one allocated network (LAN) for control of connection units (AE) for the connection of terminals (T) to the network (LAN) which provides electrical energy (E) for the connected terminals (T), wherein the connection units (AE) each have a switching element (SE) for interrupting the provision of electrical energy (E) for the terminals (T), and the connection units (AE) including their switching elements (SE) are implemented
- at one of the two plug connectors (RJ45) of a patch cable (PK), or
- in the patching cable (PK),
the management system having
- a database with the addresses (Al) of the connection unit (AE) and/or its switching element (SE),
- a control system (ZST) for forming and targeted transmission of instructions (aw) via the network (LAN) to the connection unit (AE) for controlling the switching element (SE), wherein the instructions (aw) are formed time-dependently and/or dependent on the presence or location of a user at or in the region of the associated terminals (T), or security- dependently.

13. Management system according to claim 12, equipped with a time-of-day controller and/or week controller for time-dependent control of the switching element (SE).

14. Management system according to claim 12 or 13, equipped with a network control system
- for communication with presence- and/or location-determination devices (RFID, GPS), using which the presence or location of a user on or in the region of associated terminals (T) is determined and signalled to the management system (MS), and
- for communication with a security device for security-checking of terminals (T) and their users.

15. Method for control of the connection unit according to any one of claims 1 to 12 in a communication apparatus
- with the connection unit (AE), and
- with a management system in the network (LAN) for the time-dependent and/or presence-dependent and/or the security-dependent control of the switching element (SE) via the network (LAN).

## Revendications

1. Unité de connexion destinée au raccordement d'un terminal (T) à un réseau (LAN), qui fournit au terminal (T) raccordé de l'énergie électrique (E),
- configurée pour produire de l'énergie électrique (E) pour l'unité de connexion (AE) à partir de l'énergie fournie (E) et
- comprenant un élément de commutation (SE) servant à interrompre la production d'énergie électrique destinée aux terminaux (T), sachant que l'élément de commutation (SE) est commandé par l'intermédiaire du réseau (LAN),
**caractérisée en ce que**
l'unité de connexion (AE), l'élément de commutation (SE) y compris, est réalisée
- pour l'un des deux connecteurs enfichables (RJ45) d'un câble de raccordement (PK) ou
- dans le câble de raccordement (PK).

2. Unité de connexion selon la revendication 1, **caractérisée en ce que** le réseau (LAN) est configuré comme un réseau d'alimentation électrique par Ethernet.

3. Unité de connexion selon la revendication 2, **caractérisée en ce que** l'alimentation électrique par Ethernet est configurée selon la norme IEEE 802.3af.

4. Unité de connexion selon l'une quelconque des revendications 1 à 3, **caractérisée en ce**
**qu'**une adresse de réseau (ia) est associée à l'élément de commutation (SE) et/ou à l'unité de connexion (AE), et en ce que l'élément de commutation (SE) est commandé, à l'aide de l'adresse de réseau (ai) associée, par au moins un système de gestion (MS) d'un réseau (LAN).

5. Unité de connexion selon la revendication 4, configurée pour recevoir une instruction (aw), adressée grâce à l'adresse de réseau (ai), par le système de gestion (MS) et pour commander l'élément de commutation (SE) en fonction de l'instruction (aw).

6. Unité de connexion selon l'une quelconque des revendications 1 à 5, configurée de telle manière que l'élément de commutation (SE) est commandé par l'intermédiaire du réseau (LAN)
- en fonction du temps et/ou
- en fonction de la présence et/ou de l'emplacement d'un utilisateur à proximité de terminaux (T) associés et/ou
- en fonction de la sécurité.

7. Unité de connexion selon la revendication 6, configurée de telle manière qu'une commande à la journée et/ou une commande à la semaine est prévue dans le système de gestion (MS) pour la commande dépendant du temps.

8. Unité de connexion selon la revendication 6, configurée de telle manière qu'un système d'accès ou un système RFID (RFID) ou un système GPS (GPS) ou un système de localisation sans fil sont prévus pour la commande en fonction de la présence et/ou en fonction de l'emplacement, sachant que la présence et/ou l'emplacement d'un utilisateur sont signalés au système de gestion (MS) pour la commande de l'élément de commutation (SE).

9. Unité de connexion selon l'une quelconque des revendications précédentes, configurée de telle manière que l'unité de connexion (AE) est commandée dans un mode de consommation réduite d'énergie en cas d'interruption de la production d'énergie (E) destinée aux terminaux (T).

10. Unité de connexion selon l'une quelconque des revendications précédentes, comprenant
- une commande centrale (ZST) servant à surveiller et à commander l'unité de connexion (AE),
- une commande Ethernet (EST) raccordée à la commande centrale (ZST), servant à commander le protocole Ethernet,
- un élément de commutation (SE) commandé par la commande centrale (ZST), servant à interrompre l'alimentation en énergie, qui est commutée d'un connecteur enfichable (RJ45) de l'unité de connexion à un autre connecteur enfichable (RJ45) de l'unité de connexion (AE),
- deux modules de connexion (AME) raccordés à la commande centrale (ZST) par l'intermédiaire d'un hub Ethernet (EH), servant à l'adaptation à l'Ethernet (E), au connecteur enfichable (RJ45) et à l'autre connecteur enfichable (RJ45),
- une commande d'énergie (PE) servant à adapter les tensions de l'énergie électrique (E), transmise par l'intermédiaire du connecteur enfichable (RJ45) et de l'élément de commutation (SE), aux tensions requises de l'unité de connexion (AE), et
- un accumulateur d'énergie (E) servant à alimenter en énergie l'unité de connexion (AE) en cas d'interruption de l'alimentation en énergie par l'élément de commutation (SE).

11. Unité de connexion selon l'une quelconque des revendications précédentes, sachant que le câble de raccordement (PK) est réalisé avec l'unité de connexion (AE), comprenant
- une commande centrale (ZST) servant à surveiller et à commander l'unité de connexion (AE),
- une commande Ethernet (EST) raccordée à la commande centrale (ZST), servant à commander le protocole Ethernet,
- un élément de commutation (SE) commandé par la commande centrale (ZST), servant à interrompre l'alimentation en énergie qui est commutée d'un connecteur enfichable (RJ45) de l'unité de connexion à un autre connecteur enfichable (RJ45),
- deux modules de connexion (AME) raccordés à la commande centrale (ZST) par l'intermédiaire d'un hub Ethernet (EH) destinés à l'adaptation à l'Ethernet (E), au connecteur enfichable (RJ45) et à l'autre connecteur enfichable (RJ45),
- une commande d'énergie (PE) servant à adapter les tensions de l'énergie électrique (E), transmise par l'intermédiaire du connecteur enfichable (RJ45) et de l'élément de commutation (SE), aux tensions requises de l'unité de connexion (AE), et
- un accumulateur d'énergie (E) servant à l'alimentation en énergie de l'unité de connexion (AE) en cas d'interruption de l'alimentation en énergie par l'élément de commutation (SE).

12. Système de gestion pour au moins un réseau (LAN) associé servant à commander des unités de connexion (AE) pour le raccordement de terminaux (T) au réseau (LAN), lequel fournit aux terminaux (T) raccordés de l'énergie électrique (E), sachant que les unités de connexion (AE) présentent respectivement un élément de commutation (SE) servant à interrompre la production d'énergie électrique (E) destinée aux terminaux (T) et que les unités de connexion (AZ), y compris l'élément de commutation (SE), sont respectivement réalisées
- pour un des deux connecteurs enfichables (RJ45) d'un câble de raccordement (PK) ou
- dans le câble de raccordement (PK)
- avec une base de données comprenant les adresses (ai) de l'unité de connexion (AE) et/ou des éléments de commutation (SE) de cette dernière,
- avec une commande (ZST) servant à produire et à transmettre de manière ciblée des instructions (aw) par l'intermédiaire du réseau (LAN) à l'unité de connexion (AE) pour commander l'élément de commutation (SE), sachant que les instructions (aw) sont produites en fonction du temps et/ou en fonction de la présence et de l'emplacement d'un utilisateur à proximité de terminaux (T) associés ou en fonction de la sécurité.

13. Système de gestion selon la revendication 12, configuré avec une commande à la journée et/ou une commande à la semaine servant à commander en fonction du temps l'élément de commutation (SE).

14. Système de gestion selon la revendication 12 ou 13, configuré avec une commande de réseau
- destinée à la communication avec des équipements de détermination de présence et/ou de localisation (RFID, GPS), à l'aide desquels la présence ou l'emplacement d'un utilisateur à proximité de terminaux (T) associés sont déterminés et signalés au système de gestion (MS), et
- destinée à la communication avec un équipement de sécurité servant au contrôle technique en termes de sécurité de terminaux (T) et des utilisateurs de ces derniers.

15. Procédé servant à commander l'unité de connexion selon l'une quelconque des revendications 1 à 12 dans un ensemble de communication
- avec l'unité de connexion (AE) et
- avec un système de gestion dans le réseau (LAN) pour la commande de l'élément de commutation (SE) en fonction du temps et/ou en fonction de la présence et/ou en fonction de la sécurité par l'intermédiaire du réseau (LAN).
